# EUROPÄISCHE PATENTSCHRIFT

(11) **EP 4 388 273 B1**
(45) Veröffentlichungstag und Bekanntmachung des Hinweises auf die Patenterteilung: **24.09.2025**
(21) Anmeldenummer: 22768309.1
(22) Anmeldetag: 18.08.2022
(51) Int. Cl.: F42B 3/113, F42C 15/00, G02F 1/01

(54) **ANORDNUNG UND VERFAHREN ZUR ERHÖHUNG DER FUNKTIONSSICHERHEIT EINES OPTISCH-PYROTECHNISCHEN ZÜNDERS**
ARRANGEMENT AND METHOD FOR INCREASING THE FUNCTIONAL SAFETY OF AN OPTO-PYROTECHNIC INITIATOR
AGENCEMENT ET PROCÉDÉ POUR AUGMENTER LA SÉCURITÉ FONCTIONNELLE D'UN INITIATEUR OPTO-PYROTECHNIQUE

(30) Priorität: 19.08.2021 DE 102021121536
(43) Veröffentlichungstag der Anmeldung: 26.06.2024
(73) Patentinhaber: Fraunhofer-Gesellschaft zur Förderung der angewandten Forschung e.V., 80686 München (DE)
(72) Erfinder: EICHHORN, Marc, 76275 Ettlingen (DE); KIELECK, Christelle, 76275 Ettlingen (DE)
(74) Vertreter: Gagel, Roland
(86) Internationale Anmeldenummer: PCT/EP2022/073066
(87) Internationale Veröffentlichungsnummer: WO 2023/021135

(56) Entgegenhaltungen:
- WO-A1-2016/209259
- RU-C1- 2 691 381
- US-A- 3 177 651

## Beschreibung

### Technisches Anwendungsgebiet

Die vorliegende Erfindung betrifft eine Anordnung mit einem optisch-pyrotechnischen Zünder, in welchem eine pyrotechnische Mischung durch Einwirkung von Laserstrahlung gezündet werden kann, wenigstens einem Laser, der die Laserstrahlung emittiert, und einer Lichtleitfaser, über die die Laserstrahlung zum optisch-pyrotechnischen Zünder geführt wird. Die Erfindung betrifft auch ein Verfahren zur Erhöhung der Funktionssicherheit eines derartigen optisch-pyrotechnischen Zünders.

In der Spreng- und Pyrotechnik kommt der funktionellen Sicherheit von Zündern (Detonatoren) eine besondere Bedeutung zu. Eine spezielle neuere Zünderart ist dabei der optisch-pyrotechnische Zünder, in welchem eine pyrotechnische Mischung, insbesondere ein Sprengstoff, durch optische Einwirkung von Laserlicht angezündet oder gezündet wird. Wegen der rein optischen Anbindung des pyrotechnischen Zünders über eine Lichtleitfaser an einen Laser, typischerweise in Form einer Laserdiode, hat dieser Zündertyp ein großes Potential für kritische, teils auch elektromagnetisch sensible Anwendungsbereiche, da er über keine elektrische Anbindung an die Zündelektronik verfügt, sondern über eine isolierende Lichtleitfaser verbunden ist. Allerdings reicht für viele Anwendungen die allein über die Kontrolle des Lasers gegebene funktionelle Sicherheit nicht aus, so dass ein zweiter, unabhängiger Sicherungsmechanismus erforderlich ist.

### Stand der Technik

In zivilen wie militärischen Anwendungen haben optisch-pyrotechnische Zünder bisher keine breite Nutzung gefunden. Es wird vielmehr in der Regel die bisherige Zündertechnik auf Basis elektrischer Zünder verwendet. Dabei kommen häufig mechanische Elemente zum Einsatz, welche die Zündkette geeignet unterbrechen, um eine ungewollte Zündung zu verhindern. Entsprechende mechanische Elemente können auch bei optisch-pyrotechnischen Zündern eingesetzt werden, um die Zündkette im optischen Bereich geeignet zu unterbrechen. So zeigt B. Chamayou, "Opto-Pyro Trains for Space Systems - Gains Provided by Opto-Pyro Technology in Terms of Safety on Launchers", Journal of Space Safety Engineering, Vol. 1, No. 2, December 2014, Seiten 61 bis 74, ein Beispiel für eine Anordnung mit optisch-pyrotechnischem Zünder, bei der ein derartiges mechanisches Element zum Einsatz kommt. Mechanische Elemente zur Unterbrechung oder Freigabe eines optischen Weges sind jedoch langsam, da mechanische Teile bewegt werden müssen.

In der RU 2 691 381 C1 ist eine Anordnung mit optisch- pyrotechnischem Zünder beschrieben, in dem eine pyrotechnische Mischung durch Einwirkung von Laserstrahlung gezündet werden kann. Die Anordnung weist wenigstens ein Laser, der die Laserstrahlung emittiert und eine Lichtleitfaser auf, über die die Laserstrahlung zum optisch-pyrotechnischen Zünder geführt wird. Ein linearer optischer Filter ist im Strahlweg der Laserstrahlung angeordnet, um die Laserstrahlung zu blockieren. Zur Zündung wird der Filter über ein Filterrad aus dem Strahlweg entfernt, um diesen freizugeben.

Die Aufgabe der vorliegenden Erfindung besteht darin, ein Verfahren sowie eine Anordnung mit einem optisch-pyrotechnischen Zünder anzugeben, mit denen die funktionale Sicherheit des optisch-pyrotechnischen Zünders erhöht werden kann, und die nur einen geringen Zündverzug verursachen.

### Darstellung der Erfindung

Die Aufgabe wird mit der Anordnung und dem Verfahren gemäß den Patentansprüchen 1 und 13 gelöst. Vorteilhafte Ausgestaltungen der Anordnung sowie des Verfahrens sind Gegenstand der abhängigen Patentansprüche oder lassen sich der nachfolgenden Beschreibung sowie den Ausführungsbeispielen entnehmen.

Die vorgeschlagene Anordnung weist einen optisch-pyrotechnischen Zünder, in welchem eine pyrotechnische Mischung durch Einwirkung von Laserstrahlung gezündet werden kann, sowie wenigstens einen Laser und (wenigstens) eine Lichtleitfaser auf, durch die die vom Laser emittierte Laserstrahlung zum optisch-pyrotechnischen Zünder geführt wird. Als Laser werden vorzugsweise ein oder mehrere Laserdioden eingesetzt. Die Anordnung zeichnet sich dadurch aus, dass im Strahlweg der Laserstrahlung zwischen dem Laser und einem zündwirksamen Auftreffort der Laserstrahlung in dem optisch-pyrotechnischen Zünder ein optisches Filter-Element mit leistungs- oder intensitätsabhängiger Transmission oder Reflexion für die Laserstrahlung angeordnet ist. Das optische Filter-Element weist vorzugsweise eine nichtlineare (leistungs- oder intensitätsabhängige) Transmissions- oder Reflexionsfunktion für die Laserstrahlung auf. Dieses Verhalten kann materialspezifisch vorgegeben sein, extern beeinflussbar sein oder durch die Laserstrahlung selbst zusätzlich beeinflusst werden. Das Filter-Element und die Strahlführung der Laserstrahlung durch oder über das Filter-Element sind so gewählt, dass das Filter-Element bei einer Laserleistung des Lasers, die in der Anordnung eine Zündung im optisch-pyrotechnischen Zünder auslösen soll, eine höhere Transmission oder Reflexion aufweist oder in eine höhere Transmission oder Reflexion durch ein weiteres angelegtes optisches oder elektrisches Signal schaltbar ist als bei niedrigerer Laserleistung. Das vorliegende Verfahren beruht somit auf der Nutzung mindestens eines optischen Filter-Elements, welches eine leistungs- oder intensitätsabhängige Transmission oder Reflexion aufweist und in die optische Strecke zwischen dem Laser und dem zündwirksamen Auftreffort der Laserstrahlung im Zünder eingeführt wird.

Durch die leistungs- oder intensitätsabhängige Transmissions- oder Reflexionsfunktion dieses Filter-Elements wird ein zweiter, unabhängiger Mechanismus bereitgestellt, der den zur Zündung nötigen Arbeitsbereich des Lasers bzw. die zur Zündung notwendige Leistung der vom Laser emittierten Laserstrahlung zu hohen Laserleistungen hin einschränkt. Bei diesen hohen Laserleistungen, mit denen eine gewollte Zündung der pyrotechnischen Mischung im Zünder erreicht wird, weist das Filter-Element eine hohe Transmission bzw. Reflexion auf, bei kleineren Laserleistungen eine deutlich geringere. Dadurch wird sichergestellt, dass beispielsweise ein ungewollter Betrieb einer als Laser eingesetzten Laserdiode mit moderater Leistung, wie er beispielsweise bei einem defekten Treiberschalter (Transistor, IGBT, MosFET) auftreten kann, nicht zur Zündung der pyrotechnischen Mischung durch längere Erwärmung führt, da die Laserstrahlung dieser geringeren Laserleistung durch das Filter-Element stark geschwächt oder vollständig blockiert bzw. absorbiert wird. Ein solches ungewolltes Verhalten könnte beispielsweise durch elektromagnetische Einstrahlung oder Materialfehler in der Ansteuerelektronik des Lasers verursacht werden.

In einer besonderen Ausgestaltung wird die Leistungs- oder Intensitätsabhängigkeit der Transmission oder Reflexion des optischen Filter-elements durch ein weiteres optisches oder elektronisches Signal, im Folgenden auch als externes Signal bezeichnet, beeinflusst. Besonders vorteilhaft ist dabei, wenn die Leistungs- oder Intensitätsabhängigkeit ohne angelegtes externes Signal die nötige zur Zündung erforderliche Laserleistung erhöht, so dass eine zusätzliche Sicherheit gegeben ist. Eine gewollte Zündung der pyrotechnischen Mischung im Zünder lässt sich dann bspw. in einem nichtlinearen Filtermaterial durch eine zweite Laserquelle erreichen, welche das Filtermaterial dergestalt beleuchtet, dass seine optische Leistung die Schaltschwelle des Filters herabsetzt, vorzugsweise ohne dabei auf die zündwirksame Fläche zu treffen. Diese zweite Laserquelle kann eine zur ersten die Zündleistung bereitstellenden Laserquelle vergleichbare oder unterschiedliche Wellenlänge aufweisen. Werden als Filter-Materialien Halbleiter oder leicht elektrisch leitende Kristalle eingesetzt können diese Eigenschaften bspw. auch durch einen zusätzlichen elektrischen Strom in diesem Sinne variiert werden.

Als Ausgestaltung des vorgeschlagenen optischen Filter-Elementes bieten sich unterschiedliche Möglichkeiten. So kann das optische Filter-Element beispielsweise durch einen sättigbaren Absorber gebildet sein, der erst oberhalb einer bestimmten Intensitätsschwelle gesättigt wird, also eine hohe Durchlässigkeit aufweist. Die Strahlführung durch diesen Absorber wird dann so gewählt, dass diese Intensitätsschwelle erst bei einer Laserleistung des Lasers überschritten wird, bei der in der Anordnung eine gewollte Zündung der pyrotechnischen Mischung im Zünder erfolgt. In einer weiteren Ausgestaltung wird das optische Filter-Element durch eine Kombination aus einem nichtlinearen Medium, welches leistungs- oder intensitätsabhängige Fokussierungs- oder Defokussierungseigenschaften aufweist, und einer im Strahlweg folgenden Blende realisiert, die die Laserstrahlung lediglich bei Fokussierung mittels des nichtlinearen Mediums ungehindert passieren lässt. Eine weitere Ausgestaltung des vorgeschlagenen optischen Filter-Elementes besteht in einem Dünnschicht-Reflektor, bei dem das Dünnschicht-Medium bei thermischer Einwirkung einen Phasenübergang durchführt, durch den sich die Reflektivität oder Transmission für die Laserstrahlung ändert. Diese thermische Einwirkung kann dabei intrinsisch, also durch die Laserstrahlung selbst, verursacht werden oder extrinsisch, bspw. durch einen zusätzlichen elektrischen Strom. Letzteres bietet den Vorteil einer kompletten Trennung von Lichtsignal und Filter, so dass sich zwei komplett unabhängige Sicherheitskreise realisieren lassen. Auch eine Kombination der intrinsischen und der extrinsischen Einwirkung zur entsprechenden Änderung der Transmission ist vorteilhaft.

Das optische Filter-Element kann prinzipiell an beliebiger Stelle im Strahlweg der Laserstrahlung zwischen dem Laser und dem zündwirksamen Auftreffort der Laserstrahlung im pyrotechnischen Zünder angeordnet werden. So kann das Filter-Element bereits innerhalb des Lasergehäuses, zwischen dem Lasergehäuse und der Lichtleitfaser, zwischen der Lichtleitfaser und dem optisch-pyrotechnischen Zünder oder auch innerhalb des optisch-pyrotechnischen Zünders eingesetzt werden. Auch ein Einschleifen des optischen Filter-Elementes in die Lichtleitfaser, gegebenenfalls mit einer zusätzlichen optischen Anordnung zur Fokussierung der Laserstrahlung in das Filter-Element, ist möglich. Besonders vorteilhaft wird das Filter-Element innerhalb des Lasergehäuses oder zwischen Laser bzw. Lasergehäuse und Lichtleitfaser eingesetzt, da dadurch die Wärmelast im Störfall vom Zünder bzw. dessen pyrotechnischer Mischung ferngehalten wird. Dies gilt auch für eine Anordnung zwischen zwei Abschnitten der Lichtleitfaser.

Mit der vorgeschlagenen Anordnung und dem zugehörigen Verfahren wird ein zusätzlicher Mechanismus zur Erhöhung der Sicherheit eines optisch-pyrotechnischen Zünders bereitgestellt, der in einigen Ausgestaltungen rein passive Komponenten nutzt. Dadurch ist diese zusätzliche Sicherheitsfunktion nicht von einer aktiven Ansteuerung abhängig. Je nach FilterMedium sind Reaktionszeiten unter 10 µs möglich, so dass der Zündverzug durch diese zusätzliche Sicherheitsfunktion nicht wesentlich vergrößert wird. Die Anordnung und das Verfahren lassen sich für alle optisch-pyrotechnischen Zünder im zivilen und militärischen Einsatz einsetzen.

Besonders vorteilhaft lässt sich die Erfindung nutzen, wenn mindestens zwei Laser zum Einsatz kommen, welche dazu dienen, gemeinsam die zur Zündung nötige Energie an den opto-pyrotechnischen Zünder zu liefern, indem sich deren Strahlung bspw. auf dem zündwirksamen Auftreffort überlagern oder beide Laser bspw. in die gleiche Transport-Faser zum Zünder eingekoppelt werden.

Hier kann durch eine unabhängige Ansteuerung der mindestens zwei Laser eine hohe funktionale Sicherheit realisiert werden, es tritt aber das Problem auf, dass der Betrieb einer der Laser als Konsequenz eines Fehlers ausreichen kann, um durch längere Einwirkung den Zünder zu zünden, obwohl die anderen Laser nicht aktiviert wurden. Durch Nutzung der Erfindung kann nun diese Lücke geschlossen werden. Dazu wird die Strahlung der mindestens zwei Laser im Filterelement geeignet geführt, bspw. durch Überlagerung beider Strahlen in einem aktiven Volumen des Filter-Elements, so dass die hohe Transmission oder Reflexion nur bei gleichzeitig hoher Leistung beider Laser erreicht wird. Dies kann über die gleiche Faser oder über getrennte Fasern je Laser geschehen. Bei einer Führung über die gleiche Faser ist die nötige Überlappung im Filter-Element automatisch gegeben. Dabei können bspw. auch Fasern mit mehreren lichtführenden Kernen im gleichen Fasermantel verwendet werden, in die die verschiedenen Laser eingekoppelt werden.

### Kurze Beschreibung der Zeichnungen

Die vorgeschlagene Anordnung und das zugehörige Verfahren werden nachfolgend anhand von Ausführungsbeispielen in Verbindung mit den Zeichnungen nochmals näher erläutert. Hierbei zeigen:
- Fig. 1: einen Prinzipaufbau der Zündkette einer Anordnung mit optisch-pyrotechnischem Zünder;
- Fig. 2: ein erstes Beispiel für eine Ausgestaltung der vorgeschlagenen Anordnung (Teilansicht);
- Fig. 3: ein zweites Beispiel für eine Ausgestaltung der vorgeschlagenen Anordnung (Teilansicht); und
- Fig. 4: ein drittes Beispiel für eine Ausgestaltung der vorgeschlagenen Anordnung.

### Wege zur Ausführung der Erfindung

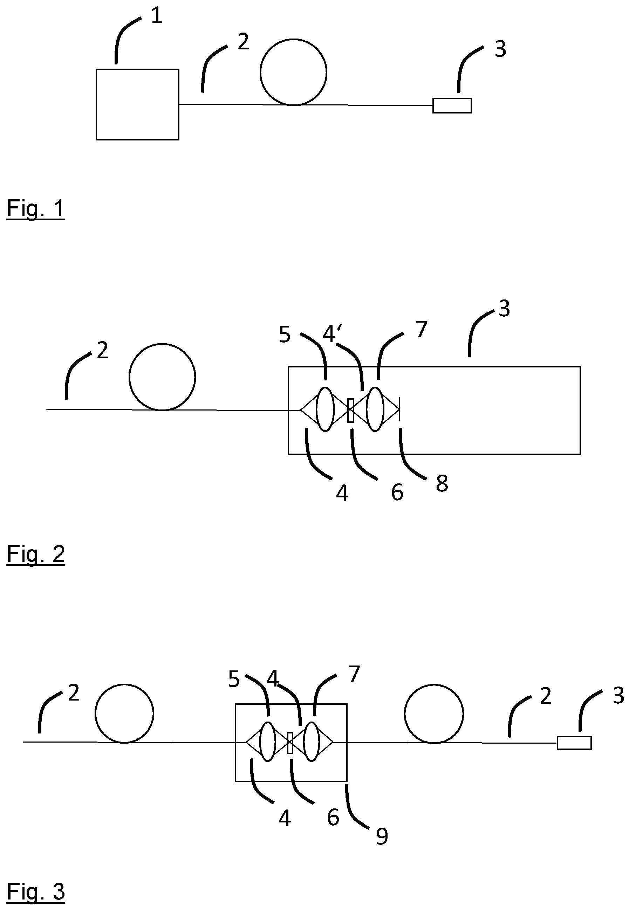

Ein optisch-pyrotechnisches Zündsystem besteht aus einem elektronisch angesteuerten Laser 1, im vorliegenden Beispiel als Laserdiode, einer Lichtleitfaser 2 und dem optisch-pyrotechnischen Zünder 3, wie dies in der Figur 1 schematisch dargestellt ist. Der optisch-pyrotechnische Zünder 3 zündet eine pyrotechnische Mischung, die nach der Zündung eine entsprechende pyrotechnische Wirkung hervorruft. Hierbei kann es sich prinzipiell um eine optische (Licht, Nebel, Rauch), eine akustische (Schall), eine thermische oder auch eine mechanische (Druck, Bewegung) Wirkung oder Kombinationen davon handeln.

Bei der vorgeschlagenen Anordnung und dem zugehörigen Verfahren wird die Sicherheit bei der Nutzung eines derartigen optisch-pyrotechnischen Zündsystems mit einem zusätzlichen Sicherheitsmechanismus erhöht. Hierzu wird ein optisches Filter-Element in die optische Strecke zwischen dem Laser 1 und dem zündwirksamen Auftreffpunkt der Laserstrahlung im optisch-pyrotechnischen Zünder 3 eingeführt, welches eine leistungs- oder intensitätsabhängige Transmission oder Reflexion aufweist.

Figur 2 zeigt hierzu in schematisierter Darstellung ein erstes Ausführungsbeispiel, in dem lediglich ein Teil der Zündkette zu erkennen ist. In diesem Beispiel ist das optische Filter-Element 6 innerhalb des optisch-pyrotechnischen Zünders 3 angeordnet. Die aus der Lichtleitfaser 2 austretende Laserstrahlung 4 wird dabei über eine Optik 5 in das Filter-Element 6 fokussiert. Durch die Wahl des Fokaldurchmessers im Filter-Element 6 wird die nichtlineare Transmissionsfunktion des Filters eingestellt, d.h. beispielsweise die Schwelle, ab welcher Laserleistung der Laserdiode die Transmission signifikant zunimmt. Die durch das Filter-Element 6 transmittierte Laserstrahlung 4' wird durch eine weitere Optik 7 auf die zur optischen Zündung empfindliche Fläche 8 geleitet, insbesondere fokussiert. Der Auftreffpunkt der Laserstrahlung auf diese Fläche wird in der vorliegenden Patentanmeldung als zündwirksamer Auftreffort bezeichnet. Durch geeignete Wahl von Fokusdurchmesser im Filter-Element 6 und der ursprünglichen Transmission des Mediums des Filter-Elementes 6 bei geringer Leistung oder Intensität, beispielsweise eingestellt durch die Dotierung oder Länge eines sättigbaren Absorbers als Filter-Element 6, wird die gewünschte Sicherheit erreicht. Fokusdurchmesser und Transmission bei geringer Laserleistung werden so eingestellt, dass zum einen bei einer Laserleistung der Laserdiode, bei der keine Zündung erfolgen soll, die obige Schwelle im Filter-Element nicht erreicht wird und die auf die Fläche 8 treffende Leistung durch die geringe Transmission des Filter-Elementes 6 zuverlässig, also auch bei längerer Bestrahlung, unter der gewünschten Zündschwelle bleibt oder unter diese Zündschwelle reduziert wird. Zum anderen wird der Fokusdurchmesser so gewählt, dass die obige Schwelle im Filter-Element mit einer Laserleistung überschritten wird, bei der die Zündung erfolgen soll. Bei Verwendung eines reflektierenden anstelle eines transmittierenden Filter-Elementes wird der Laserstrahl an diesem Element reflektiert, wobei die Laserstrahlung 4' der Fig. 2 dann der reflektierten Strahlung entspricht.

In einem weiteren Ausführungsbeispiel wird das Filter-Element 6 in einer eigenständigen Komponente 9 in die Lichtleitfaser 2 eingeschleift, wie dies in Figur 3 schematisch angedeutet ist. Figur 3 zeigt wiederum lediglich einen Teil der Zündkette. Diese Anordnung innerhalb der Lichtleitfaser 2 entkoppelt eine eventuelle Aufheizung des Filter-Elementes 6 im Störfall vom optisch-pyrotechnischen Zünder 3, was die funktionale Sicherheit der Zündkette weiter erhöht. Auch hier erfolgt wiederum eine Fokussierung der Laserstrahlung in das optische Filter-Element 6 sowie eine anschließende Kollimierung oder Fokussierung für die weitere Führung in der Lichtleitfaser 2.

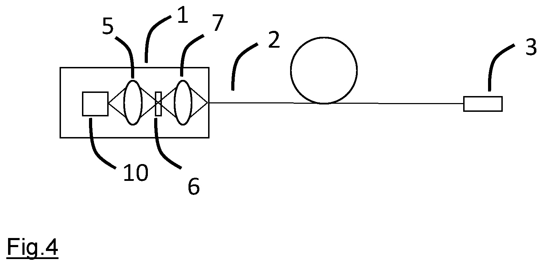

In einem weiteren Ausführungsbeispiel, wie es schematisch in Figur 4 dargestellt ist, ist die Filterkomponente mit dem optischen Filter-Element 6 im Gehäuse des Lasers 1 zwischen dem in diesem Gehäuse befindlichen laseraktiven Material 10, bspw. eines Halbleiterlasers, und der Lichtleitfaser 2 angeordnet. Dies minimiert die Anzahl der Faserkopplungen und erhöht so die Robustheit des Systems. Auch hier erfolgt über zwei Optiken 5, 7 wiederum eine Fokussierung der Laserstrahlung in das Filter-Element 6 und eine anschließende Kollimierung oder auch Fokussierung für die weitere Führung der Laserstrahlung.

### Bezugszeichenliste

- 1: Laser
- 2: Lichtleitfaser
- 3: optisch-pyrotechnischer Zünder
- 4: Laserstrahlung
- 4': Laserstrahlung nach Durchgang durch Filter-Element
- 5: Optik
- 6: Filter-Element
- 7: Optik
- 8: für optische Zündung empfindliche Fläche
- 9: Komponente mit Filter-Element
- 10: Laseraktives Material

## Patentansprüche

1. Anordnung mit optisch-pyrotechnischem Zünder (3), in welchem eine pyrotechnische Mischung durch Einwirkung von Laserstrahlung gezündet werden kann, wenigstens einem Laser (1, 10), der die Laserstrahlung (4) emittiert, und einer Lichtleitfaser (2), über die die Laserstrahlung (4) zum optisch-pyrotechnischen Zünder (3) geführt wird, **dadurch gekennzeichnet,**
**dass** in einem Strahlweg der Laserstrahlung (4) zwischen dem Laser (1, 10) und einem zündwirksamen Auftreffort der Laserstrahlung (4) in dem optisch-pyrotechnischen Zünder (3) ein optisches Filter-Element (6) mit leistungs- oder intensitätsabhängiger Transmission oder Reflektion für die Laserstrahlung (4) angeordnet ist, wobei das Filter-Element (6) und eine Strahlführung der Laserstrahlung (4) durch das Filter-Element (6) so gewählt sind, dass das Filter-Element (6) bei einer Laserleistung des wenigstens einen Lasers (1, 10), die in der Anordnung eine Zündung im optisch-pyrotechnischen Zünder (3) auslösen soll, eine höhere Transmission oder Reflexion aufweist oder durch Anlegen eines von der Laserstrahlung (4) unabhängigen optischen oder elektronischen Signals in eine höhere Transmission oder Reflexion schaltbar ist als bei niedrigerer Laserleistung.

2. Anordnung nach Anspruch 1,
**dadurch gekennzeichnet,**
**dass** das von der Laserstrahlung (4) des wenigstens einen Lasers (1, 10) unabhängige optische Signal Laserstrahlung wenigstens eines weiteren Lasers ist, die so in das Filter-Element (6) eingekoppelt wird, dass die höhere Transmission oder Reflexion bei der zur Auslösung der Zündung erforderlichen Laserleistung des wenigstens einen Lasers (1, 10) nur durch Überlagerung der Laserstrahlung (4) des wenigstens einen Lasers (1, 10) mit der Laserstrahlung des wenigstens einen weiteren Lasers im Filter-Element (6) erreicht wird.

3. Anordnung nach Anspruch 1 oder 2,
**dadurch gekennzeichnet,**
**dass** das optische Filter-Element (6) durch einen sättigbaren Absorber gebildet ist.

4. Anordnung nach Anspruch 1 oder 2,
**dadurch gekennzeichnet,**
**dass** das optische Filter-Element (6) durch eine Kombination aus einem optisch nichtlinearen Medium, welches leistungs- oder intensitätsabhängige Fokussierungs- oder Defokussierungseigenschaften aufweist, mit einer auf dem Strahlweg der Laserstrahlung (4) folgenden Blende, gebildet ist, die die Laserstrahlung (4) lediglich bei einer Fokussierung durch das nichtlineare Medium ungehindert passieren lässt.

5. Anordnung nach Anspruch 1 oder 2,
**dadurch gekennzeichnet,**
**dass** das optische Filter-Element (6) durch einen Dünnschichtreflektor gebildet ist, dessen Reflektivität sich thermisch durch einen Phasenübergang verändert.

6. Anordnung nach Anspruch 5,
**dadurch gekennzeichnet,**
**dass** das optische Filter-Element (6) eine steuerbare Einrichtung zur Aufheizung des Dünnschichtreflektors aufweist.

7. Anordnung nach einem der Ansprüche 1 bis 6,
**dadurch gekennzeichnet,**
**dass** die Anordnung mehrere Laser (1, 10) für die Emission der Laserstrahlung aufweist, wobei von den Lasern (1, 10) emittierte Laserstrahlen wenigstens im optisch-pyrotechnischen Zünder (3) und vorzugsweise auch im optischen Filter-Element (6) überlagert werden.

8. Anordnung nach einem der Ansprüche 1 bis 7,
**dadurch gekennzeichnet,**
**dass** die Laserstrahlung (4) durch eine optische Anordnung (5) auf oder in das optische Filter-Element (6) fokussiert wird.

9. Anordnung nach einem der Ansprüche 1 bis 8,
**dadurch gekennzeichnet,**
**dass** das Filter-Element (6) im optisch-pyrotechnischen Zünder (3) oder zwischen der Lichtleitfaser (2) und dem optisch-pyrotechnischen Zünder (3) angeordnet ist.

10. Anordnung nach einem der Ansprüche 1 bis 8,
**dadurch gekennzeichnet,**
**dass** das Filter-Element (6) innerhalb eines Gehäuses für den oder die Laser (1, 10) oder zwischen dem oder den Lasern (1, 10) und der Lichtleitfaser (2) angeordnet ist.

11. Anordnung nach einem der Ansprüche 1 bis 8,
**dadurch gekennzeichnet,**
**dass** das Filter-Element (6) in die Lichtleitfaser (2) eingeschleift ist.

12. Anordnung nach einem der Ansprüche 1 bis 11,
**dadurch gekennzeichnet,**
**dass** der Laser (1, 10) ein Halbleiterlaser ist.

13. Verfahren zur Erhöhung der Zündsicherheit eines optisch pyrotechnischen Zünders (3), in welchem eine pyrotechnische Mischung durch Einwirkung von Laserstrahlung (4) gezündet werden kann, wobei in einem Strahlweg der Laserstrahlung (4) zwischen wenigstens einem Laser (1, 10), der die Laserstrahlung (4) emittiert, und einem zündwirksamen Auftreffort der Laserstrahlung (4) im optisch-pyrotechnischen Zünder (3) ein optisches Filter-Element (6) mit leistungs- oder intensitätsabhängiger Transmission oder Reflektion für die Laserstrahlung (4) angeordnet wird, wobei das Filter-Element (6) und eine Strahlführung der Laserstrahlung (4) durch das Filter-Element (6) so gewählt werden, dass das Filter-Element (6) bei einer Laserleistung des wenigstens einen Lasers (1, 10), durch die im optisch-pyrotechnischen Zünder (3) eine Zündung ausgelöst werden soll, eine höhere Transmission oder Reflexion aufweist oder durch Anlegen eines von der Laserstrahlung (4) unabhängigen optischen oder elektronischen Signals in eine höhere Transmission oder Reflexion geschaltet wird als bei niedrigerer Laserleistung.

14. Verfahren nach Anspruch 13,
**dadurch gekennzeichnet,**
**dass** als das von der Laserstrahlung (4) unabhängige optische Signal Laserstrahlung wenigstens eines weiteren Lasers eingesetzt wird, die so in das Filter-Element (6) eingekoppelt wird, dass die höhere Transmission oder Reflexion bei der zur Auslösung der Zündung erforderlichen Laserleistung des wenigstens einen Lasers (1, 10) nur durch Überlagerung der Laserstrahlung (4) des wenigstens einen Lasers (1, 10) mit der Laserstrahlung des wenigstens einen weiteren Lasers im Filter-Element (6) erreicht wird.

15. Verfahren nach Anspruch 13 oder 14,
**dadurch gekennzeichnet,**
**dass** die Laserstrahlung (4) auf oder in das optische Filter-Element (6) fokussiert wird.

16. Verfahren nach einem der Ansprüche 13 bis 15,
**dadurch gekennzeichnet,**
**dass** das Filter-Element (6) im optisch-pyrotechnischen Zünder (3) oder zwischen einer Lichtleitfaser (2), über die die Laserstrahlung (4) zum optisch-pyrotechnischen Zünder (3) geführt wird, und dem optisch-pyrotechnischen Zünder (3) angeordnet wird.

17. Verfahren nach einem der Ansprüche 13 bis 15,
**dadurch gekennzeichnet,**
**dass** das Filter-Element (6) innerhalb eines Gehäuses für den Laser (1, 10) oder zwischen dem Laser (1, 10) und wenigstens einer Lichtleitfaser (2) angeordnet wird, über die die Laserstrahlung (4) zum optisch-pyrotechnischen Zünder (3) geführt wird.

18. Verfahren nach einem der Ansprüche 13 bis 15,
**dadurch gekennzeichnet,**
**dass** das Filter-Element (6) in eine Lichtleitfaser (2) eingeschleift wird, über die die Laserstrahlung (4) zum optisch-pyrotechnischen Zünder (3) geführt wird.

19. Verfahren nach einem der Ansprüche 13 bis 18,
**dadurch gekennzeichnet,**
**dass** mehrere Laser (1, 10) für die Emission der Laserstrahlung eingesetzt werden, wobei von den Lasern (1, 10) emittierte Laserstrahlen wenigstens im zündwirksamen Auftreffort der Laserstrahlung (4) im optisch-pyrotechnischen Zünder (3) und vorzugsweise auch im optischen Filter-Element (6) überlagert werden.

## Claims

1. Arrangement with opto-pyrotechnic initiator (3), in which a pyrotechnic mixture can be ignited by the effect of laser radiation, at least one laser (1, 10) which emits the laser radiation (4), and an optical fibre (2), via which the laser radiation (4) is guided to the opto-pyrotechnic initiator (3),
**characterized in that**
an optical filter element (6) having power-dependent or intensity-dependent transmission or reflection for the laser radiation (4) is arranged in a beam path of the laser radiation (4) between the laser (1, 10) and an initiating impingement location of the laser radiation (4) in the opto-pyrotechnic initiator (3), wherein the filter element (6) and a beam guidance of the laser radiation (4) through the filter element (6) are selected such that for a laser power of the at least one laser (1, 10) by which an initiation is to be effected in the opto-pyrotechnic initiator (3) in the arrangement, the filter element (6) has a higher transmission or reflection, or can be switched to a higher transmission or reflection by applying an optical or electronic signal that is independent of the laser radiation (4) than at a lower laser power.

2. Arrangement according to Claim 1,
**characterized in that**
the optical signal which is independent of the laser radiation (4) of the at least one laser (1, 10) is laser radiation from at least one further laser, which is coupled into the filter element (6) in such a way that the higher transmission or reflection with the laser power of the at least one laser (1, 10) required to effect the initiation is only attained by superimposing the laser radiation (4) of the at least one laser (1, 10) with the laser radiation of the at least one further laser in the filter element (6).

3. Arrangement according to Claim 1 or 2,
**characterized in that**
the optical filter element (6) is formed by a saturable absorber.

4. Arrangement according to Claim 1 or 2,
**characterized in that**
the optical filter element (6) is formed by a combination of an optically non-linear medium that has power-dependent or intensity-dependent focusing or defocusing properties, with a following aperture on the beam path of the laser radiation (4) which allows the laser radiation (4) to pass unobstructed only with focusing by means of the non-linear medium.

5. Arrangement according to Claim 1 or 2,
**characterized in that**
the optical filter element (6) is formed by a thin-film reflector, whose reflectivity changes thermally by a phase transition.

6. Arrangement according to Claim 5,
**characterized in that**
the optical filter element (6) includes a controllable device for heating the thin-film reflector.

7. Arrangement according to any one of Claims 1 to 6, **characterized in that**
the arrangement includes a plurality of lasers (1, 10) for the emission of the laser radiation, wherein laser beams emitted by the lasers (1, 10) are superimposed at least in the opto-pyrotechnic initiator (3) and preferably also in the optical filter element (6).

8. Arrangement according to any one of Claims 1 to 7, **characterized in that**
the laser radiation (4) is focused onto or into the optical filter element (6) through an optical system (5).

9. Arrangement according to any one of Claims 1 to 8, **characterized in that**
the filter element (6) is arranged in the opto-pyrotechnic initiator (3) or between the optical fibre (2) and the opto-pyrotechnic initiator (3).

10. Arrangement according to any one of Claims 1 to 8, **characterized in that**
the filter element (6) is arranged inside a housing for the one or more lasers (1, 10) or between the one or more lasers (1, 10) and the optical fibre (2).

11. Arrangement according to any one of Claims 1 to 8, **characterized in that**
the filter element (6) is inserted in the optical fibre (2).

12. Arrangement according to any one of Claims 1 to 11,
**characterized in that**
the laser (1, 10) is a semiconductor laser.

13. Method for improving the ignition safety of an opto-pyrotechnic initiator (3), in which a pyrotechnic mixture can be initiated by the effect of laser radiation (4),
wherein an optical filter element (6) with power-dependent or intensity-dependent transmission or reflection for the laser radiation (4) is arranged in a beam path of the laser radiation (4) between at least one laser (1, 10), which emits the laser radiation (4), and an initiating impingement location of the laser radiation (4) in the opto-pyrotechnic initiator (3), wherein the filter element (6) and a beam guidance of the laser radiation (4) through the filter element (6) are selected such that with a laser power of the at least one laser (1, 10), by which an initiation is to be effected in the opto-pyrotechnic initiator (3), the filter element (6) has a higher transmission or reflection or is switched to a higher transmission or reflection than at a lower laser power by applying an optical or electronic signal that is independent of the laser radiation (4).

14. Method according to Claim 13,
**characterized in that**
laser radiation from at least one further laser is used as the optical signal independent of the laser radiation (4), and is coupled into the filter element (6) in such a way that the higher transmission or reflection at the laser power of the at least one laser (1, 10) needed to effect the initiation is only reached by superimposing the laser radiation (4) from the at least one lasers (1, 10) with the laser radiation from the at least one further laser in the filter element (6).

15. Method according to Claim 13 or 14,
**characterized in that**
the laser radiation (4) is focused onto or into the optical filter element (6).

16. Method according to any one of Claims 13 to 15, **characterized in that**
the filter element (6) is arranged in the opto-pyrotechnic initiator (3) or between an optical fibre (2) via which the laser radiation (4) is guided to the opto-pyrotechnic initiator (3) and the opto-pyrotechnic initiator (3).

17. Method according to any one of Claims 13 to 15, **characterized in that**
the filter element (6) is arranged inside a housing for the laser (1, 10) or between the laser (1, 10) and at least one optical fibre (2) via which the laser radiation (4) is guided to the opto-pyrotechnic initiator (3).

18. Method according to any one of Claims 13 to 15, **characterized in that**
the filter element (6) is fitted into an optical fibre (2) via which the laser radiation (4) is guided to the opto-pyrotechnic initiator (3).

19. Method according to any one of Claims 13 to 18, **characterized in that**
multiple lasers (1, 10) are used for the emission of the laser radiation, wherein laser beams emitted by the lasers (1, 10) are superimposed at least in the initiating impingement location of the laser radiation (4) in the opto-pyrotechnic initiator (3), and preferably also in the optical filter element (6).

## Revendications

1. Dispositif comprenant un allumeur optique-pyrotechnique (3), dans lequel un mélange pyrotechnique par rayonnement laser peut être allumé, au moins un laser (1, 10), qui émet le rayonnement laser (4) et une fibre optique (2) par laquelle le rayonnement laser (4) est guidé vers l'allumeur optique-pyrotechnique (3), **caractérisé en ce que**
un élément filtrant optique (6) à transmission ou réflexion du rayonnement laser (4) dépendant de la puissance ou de l'intensité est disposé dans un trajet du rayonnement laser (4) entre le laser (1, 10) et un point d'incidence du rayonnement laser (4) dans l'allumeur optique-pyrotechnique (3), dans lequel l'élément filtrant (6) et un guide de faisceau du rayonnement laser (4) à travers l'élément filtrant (6) sont choisis de telle sorte que l'élément filtrant (6) présente, à une puissance laser d'au moins un laser (1, 10) destiné à déclencher l'allumage dans l'allumeur optique-pyrotechnique (3) du dispositif, une transmission ou réflexion supérieure ou peut être commuté vers une transmission ou une réflexion plus élevée qu'à une puissance laser plus faible par l'application d'un signal optique ou électronique indépendant du rayonnement laser (4).

2. Dispositif selon la revendication 1, **caractérisé en ce que**
le signal optique indépendant du rayonnement laser (4) d'au moins un laser (1, 10) est un rayonnement laser provenant d'au moins un autre laser, qui est couplé à l'élément filtrant (6) de telle sorte que la transmission ou la réflexion plus élevée à la puissance laser d'au moins un laser (1, 10) nécessaire au déclenchement de l'allumage soit obtenue uniquement par superposition du rayonnement laser (4) d'au moins un laser (1, 10) avec le rayonnement laser d'au moins un autre laser dans l'élément filtrant (6).

3. Dispositif selon la revendication 1 ou 2, **caractérisé en ce que**
l'élément filtrant optique (6) est constitué d'un absorbant saturable.

4. Dispositif selon la revendication 1 ou 2, **caractérisé en ce que**
l'élément filtrant optique (6) est constitué d'un milieu optiquement non linéaire, qui présente des propriétés de focalisation ou de défocalisation dépendant de la puissance ou de l'intensité et d'une ouverture suivant le trajet du rayonnement laser (4), qui permet au rayonnement laser (4) de passer librement uniquement lorsqu'il est focalisé par le milieu non linéaire.

5. Dispositif selon la revendication 1 ou 2, **caractérisé en ce que**
l'élément filtrant optique (6) est constitué d'un réflecteur à couche mince, dont la réflectivité varie thermiquement par une transition de phase.

6. Dispositif selon la revendication 5, **caractérisé en ce que**
l'élément filtrant optique (6) est équipé d'un dispositif de chauffage réglable du réflecteur à couche mince.

7. Dispositif selon une des revendications 1 à 6, **caractérisé en ce que**
le dispositif comporte plusieurs lasers (1, 10) pour l'émission du rayonnement laser, dans lequel les faisceaux laser émis par les lasers (1, 10) sont superposés au moins dans l'allumeur optique-pyrotechnique (3) et, de préférence, également dans l'élément filtrant optique (6).

8. Dispositif selon une des revendications 1 à 7, **caractérisé en ce que**
le rayonnement laser (4) est focalisé sur ou dans l'élément filtrant optique (6) par un dispositif optique (5).

9. Dispositif selon une des revendications 1 à 8, **caractérisé en ce que**
l'élément filtrant (6) est disposé dans l'allumeur optique-pyrotechnique (3) ou entre la fibre optique (2) et l'allumeur optique-pyrotechnique (3).

10. Dispositif selon une des revendications 1 à 8, **caractérisé en ce que**
l'élément filtrant (6) est disposé dans un boîtier pour le(s) laser(s) (1, 10) ou entre le(s) laser(s) (1, 10) et la fibre optique (2).

11. Dispositif selon une des revendications 1 à 8, **caractérisé en ce que**
l'élément filtrant (6) est intégré dans la fibre optique (2).

12. Dispositif selon une des revendications 1 à 11, **caractérisé en ce que**
le laser (1, 10) est un laser à semi-conducteur.

13. Procédé pour augmenter la fiabilité d'allumage d'un allumeur pyrotechnique optique (3), dans lequel un mélange pyrotechnique peut être allumé par l'action d'un rayonnement laser (4),
dans lequel, sur un trajet du faisceau du rayonnement laser (4) entre au moins un laser (1, 10), qui émet le rayonnement laser (4), et un point d'incidence effectif d'allumage du rayonnement laser (4) dans l'allumeur pyrotechnique optique (3), un élément filtrant optique (6) à transmission ou réflexion dépendant de la puissance ou de l'intensité pour le rayonnement laser (4) est disposé, dans lequel l'élément filtrant (6) et un guide de faisceau du rayonnement laser (4) à travers l'élément filtrant (6) sont choisis de telle sorte que l'élément filtrant (6) présente, à une puissance laser d'au moins un laser (1, 10) destiné à déclencher l'allumage dans l'allumeur optique-pyrotechnique (3) du dispositif, une transmission ou réflexion supérieure ou peut être commuté vers une transmission ou une réflexion plus élevée qu'à une puissance laser plus faible par l'application d'un signal optique ou électronique indépendant du rayonnement laser (4).

14. Procédé selon la revendication 13, **caractérisé en ce que**
le rayonnement laser d'au moins un autre laser est utilisé comme signal optique indépendant du rayonnement laser (4), qui est couplé à l'élément filtrant (6) de telle sorte que la transmission ou la réflexion plus élevée à la puissance laser d'au moins un laser (1, 10) nécessaire au déclenchement de l'allumage soit obtenue uniquement par superposition du rayonnement laser (4) d'au moins un laser (1, 10) avec le rayonnement laser d'au moins un autre laser dans l'élément filtrant (6).

15. Procédé selon la revendication 13 ou 14, **caractérisé en ce que**
le rayonnement laser (4) est focalisé sur ou dans l'élément filtrant optique (6).

16. Procédé selon une quelconque des revendications 13 à 15, **caractérisé en ce que**
l'élément filtrant (6) est disposé dans l'allumeur pyrotechnique optique (3) ou entre une fibre optique (2), par laquelle le rayonnement laser (4) est guidé vers l'allumeur pyrotechnique optique (3), et l'allumeur pyrotechnique optique (3).

17. Procédé selon une quelconque des revendications 13 à 15, **caractérisé en ce que**
l'élément filtrant (6) est disposé dans un boîtier pour le laser (1, 10) ou entre le laser (1, 10) et au moins une fibre optique (2), par laquelle le rayonnement laser (4) est guidé vers l'allumeur pyrotechnique optique (3).

18. Procédé selon une quelconque des revendications 13 à 15, **caractérisé en ce que** l'élément filtrant (6) est intégré dans une fibre optique (2), par laquelle le rayonnement laser (4) est guidé vers l'allumeur optique-pyrotechnique (3).

19. Procédé selon une quelconque des revendications 13 à 18, **caractérisé en ce que**
plusieurs lasers (1, 10) sont utilisés pour émettre le rayonnement laser, dans lequel les faisceaux laser émis par les lasers (1, 10) sont superposés au moins au point d'incidence effectif d'allumage du rayonnement laser (4) dans l'allumeur optique-pyrotechnique (3) et, de préférence, également dans l'élément filtrant optique (6).
